# EUROPEAN PATENT SPECIFICATION

(11) **EP 0 512 639 B1**
(45) Date of publication and mention of the grant of the patent: **28.08.1996**
(21) Application number: 92201255.4
(22) Date of filing: 05.05.1992
(51) Int. Cl.: B01D 35/027, B01D 29/23

(54) **Reservoir return filter**
Rückflussfilter für Behälter
Retour-filtre pour reservoir

(30) Priority: 06.05.1991 BE 9100418
(43) Date of publication of application: 11.11.1992
(73) Proprietor: FAIREY ARLON B.V., NL-6827 BV Arnhem (NL)
(72) Inventor: Bartels, Antonius Josephus, NL-6816 TS Arnhem (NL)
(74) Representative: 't Jong, Bastiaan Jacobus

(56) References cited:
- DE-A- 2 235 246
- GB-A- 2 004 472
- US-A- 3 288 291

## Description

The invention relates to a return filter for mounting in a reservoir wall as defined in the introductory part of claim 1.

Such a filter is known from DE-A-2 235 246. In this known filter a sub-assembly comprising a pressure relief valve is mounted on the filter element and the filter element with the sub-assembly is placed in the holder. In this situation the sub-assembly engages the filter holder. The sub-assembly, filter element and filter element holder are pressed tightly in the housing by means of the pressing element carried by the screw cover.

When replacing the filter element, the filter element holder, the sub-assembly and the filter element are to be removed from the housing after unscrewing the screw cap. The parts have to be disassembled and the sub-assembly and the filter holder have to be cleaned before they can be reused with a new filter element. Filtered-out material is gathered in the filter element holder, so that proper cleaning is important for assuring that the liquid system remains free from unwanted particles.

The invention has for its object to provide a reservoir return filter of the kind described above which has a simpler construction and is easier to use.

This object is achieved with the filter as characterized in claim 1. The filter element can be arranged in the filter and removed therefrom in very simple manner, while on the other hand the flow of liquid for filtering flows through the filter element from inside to outside. The material to be filtered thus remains behind inside the filter. When the filter is replaced filtered-out material can therefore not still find its way into the reservoir due to carelessness, which could happen if the liquid flow proceeded from outside to inside. Owing to the construction with the support of the filter element on a spring, the filter element likewise acquires a pressure relief valve function. If the pressure of the liquid should rise too high, for example because the filter element has become too dirty, the filter element is pressed entirely downward counter to the pressure of the spring, whereby the filter element is released from the pressing element and the oil can thus bypass the filter element.

A further favourable development is characterized in claim 2. A dirtied filter element can be taken out in simple manner because it remains connected to the screw cover with the resilient fingers.

Achieved with the step of claim 3 is that when the screw cover is tightened the pressing element does not have to turn therewith so that the pressing element is not undesirably loaded and no undesirable friction is excited when the cover is closed.

The pressing element can be embodied in simple manner as characterized in claim 4. Incorporating a magnet in the housing achieves in per se known manner that metal particles are reliably filtered out.

A further favourable development is characterized in claim 5. The return filter herein also fulfills the function of a venting for the reservoir so that no extra venting means has to be mounted on the reservoir. When, as according to claim 6, the outer wall part of the double wall is removable, the venting filter element can be cleaned in simple manner or be replaced by a new one.

The return filter according to the invention can because of its design suitably be made wholly or partially of plastic so that the cost price thereof can favourably remain relatively low.

The invention will be further elucidated in the following description with reference to an embodiment shown in the figures.

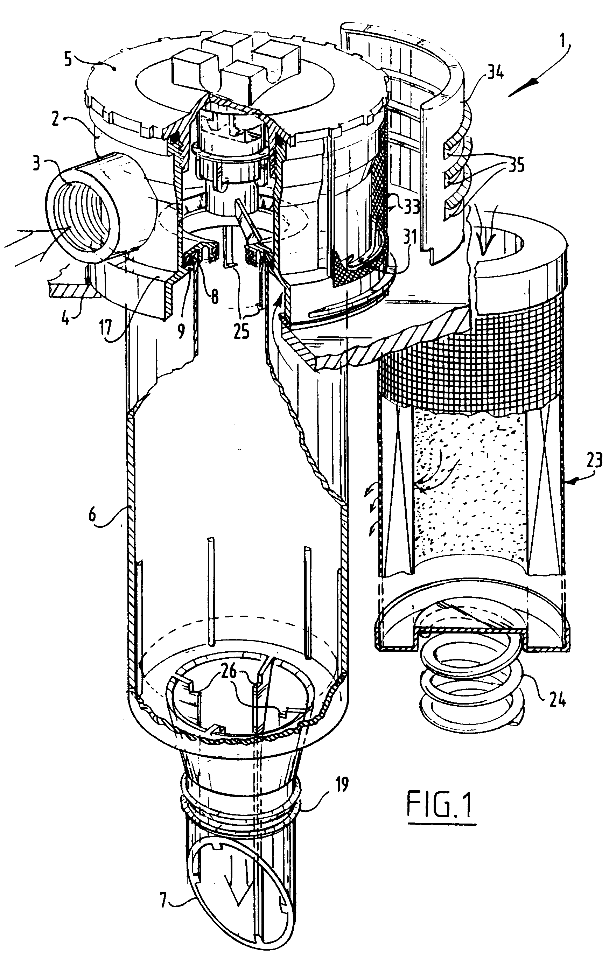

Figure 1 shows the return filter according to a preferred embodiment of the invention in a partially broken away perspective view with parts dismantled.

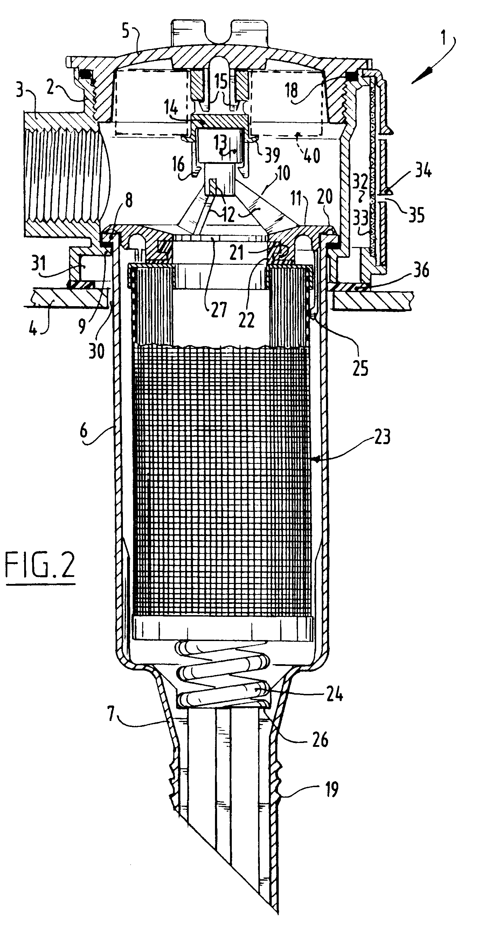

Figure 2 shows a longitudinal section of the return filter of figure 1.

The filter 1 comprises a housing 2 which is open on the bottom side and mounted over an opening in a wall 4 of a reservoir. Fitting can take place for instance using a clamping bracket (not shown) which engages onto the flange 17 close to the bottom rim of the housing.

The housing 2 is provided with a connection 3 for a return conduit of for instance a hydraulic oil circuit. The fed back hydraulic oil returns to the reservoir via the filter housing.

On the top the housing 2 carries a screw cover 5 which can be screwed onto the housing 2 in sealed manner using an O-ring 18.

Close to the open bottom end of housing 2 the filter comprises a filter element holder 6. This latter is generally cylinder-shaped and has an outflow 7 at its bottom end. At its top end the filter element holder 6 carries an outward protruding flange 8 which co-acts with a shoulder 9 in housing 2. As is clearly apparent from the figures, the filter element holder 6 can be placed in position when the cover 5 is removed from the housing. The filter element holder 6 is inserted into the housing until the protruding flange 8 comes into contact with the shoulder 9. A sealing ring is received in the usual manner between the flange and shoulder. The cover 5 carries a pressing element 10 protruding into the interior of housing 2. This pressing element 10 comprises a disc-shaped element 11 that lies with an outer edge 20 on the top edge of flange 8. The disc-shaped element 11 is connected via struts 12 to a shaft stub 13 which is rotatably received in a connecting element 14. The latter is connected to the cover 5 using a snap connection comprising elastic hooks 15. The connecting piece 14 likewise carries hooks 16 which grip around the shaft stub 13 so that the component consisting of the disc 11, struts 12 and shaft stub 13 is connected semi-permanently but rotatably to the connecting piece 14.

It will be apparent that when the cover 5 is taken off the housing 2 the whole pressing element 10 remains joined to the cover 5 and can thus be taken out of the housing therewith.

The dimensioning of the pressing element 10 is such that when the screw cover 5 is fixedly screwed onto the housing 2 in the situation as shown in the figures, the end edge 20 of the disc-shaped element presses the filter element holder 6 fixedly onto the shoulder 9. The end edge 20 is therein connected in sealed manner to the upper surface of the flange 8.

The disc 11 is provided with a central opening 27 through which the liquid supplied via the connection 3 can flow downward into the filter element holder 6. A cylinder wall-shaped filter element 23 is received in the holder 6. This filter element 23 has a closed bottom which rests on a spring 24 which also rests against a support surface 26 in the bottom of the filter element holder 6. The spring 24 is clamped radially in projections so that when the filter element 23 is exchanged the spring is held fixedly in this position. The pressing member 10 is provided around the opening 27 with a pressure edge 21 which lies via a seal 22 on the upper head end surface of the filter element 23. The dimensioning of the pressing element is such that in the situation drawn the filter element 23 is pressed downward through a certain distance counter to the force of the spring 24, so that the spring generates a reaction force which holds the filter element 23 pressed against the seal 22 of the pressure edge 21.

The liquid supplied via the connection 3 thus flows via the interior of the housing and the opening 27 in the pressing member 10 into the interior of the filter element 23. The liquid flows herefrom through the cylinder wall of the filter element, which is formed by filter material, to the exterior thereof. The thus filtered liquid then flows downward via the interspace between the filter element 23 and the inner wall of holder 6 and into the reservoir via the outflow 7. The outflow 7 is provided on its outer periphery with ridges 19 for a hose optionally for sliding onto the outflow. With such a hose the outflow 7 can be elongated as desired in order to ensure that it reaches at all times to below the lowest liquid level.

The disc 11 is provided with a number of downward protruding resilient fingers 25, the protruding ends of which lie in their non-tensioned rest position at a diameter which is smaller than the outer diameter of the filter element 23. These fingers 25 thus clamp round the filter element 23. When the screw cover 5 is now unscrewed and removed from the housing 2, the filter element 23 is simultaneously also pulled out of the holder 6 by the resilient fingers 25. The filter element 23 can thus be removed from the filter in a very simple manner and replaced by a new one. Placing of the new filter element in the housing in reverse sequence likewise proceeds in very simple manner.

Because the filter element 23 is pressed in axial direction by the spring 24 the element also acts as pressure relief valve. As soon as the pressure difference over the filter element 23 becomes greater than a predetermined value, the entire filter element 23 is pressed downward counter to the force of the spring 24 whereby a passage gap is opened between the upper head end surface of the filter element 23 and the seal 22. The supplied oil can hereby partially bypass the filter element 23, thus preventing too high a pressure occurring in the system.

Remaining between the edge of the opening in the reservoir wall 4 and the outer wall of the filter element holder 6 is a gap 30 which is utilized in favourable manner for venting the tank 4. The gap 30 communicates with a channel 31 which is defined beneath the shoulder 9 and which is in turn in communication with a part of the housing 2 embodied as a double wall. The outer wall 34 of this double wall is embodied in the embodiment shown as a detachable cover and is provided with a number of openings 35. A venting filter element 33 is arranged behind the cover 34. Via the gap 30, the channel 31, the space 32 between the double wall and through the venting filter element 33 an excess of air or other gas present in the reservoir can escape through the openings 35 in the cover 34. The venting filter element prevents dirt being able to penetrate in reverse direction into the reservoir and moreover holds back any fine droplets of liquid attempting to escape to the outside with the gas flow. The packing 36 arranged between the housing 2 and the reservoir wall 4 can in this respect be favourably embodied such that the gap 30 is closed off in the vicinity of the double wall part and only opened on the opposite side. The escaping gas hereby has to cover a maximum distance via the channel 31 and liquid droplets carried along therewith are thus collected as well as possible.

The pressing element 10, and in the embodiment particularly the connecting piece 14 thereof, is provided with an outward protruding edge 39. This edge 39 can fixedly hold an annular magnet 40, shown here with dashed lines, against the cover 5. The magnet 40 is used if it is expected that the liquid for filtering comprises magnetic metal particles, in particular iron or steel. These metal particles are held by the magnet 40 in reliable manner so that in this respect the filter action is reinforced. When the filter element 23 is replaced the magnet 40 is also divested of adhering metal particles.

The design of the preferred embodiment shown is such that the components thereof can be manufactured wholly or partially of plastic. The filter according to the invention can hereby be manufactured for a comparatively favourable cost price.

Filter element holders 6 of varying lengths can be received in the housing 2 of filter 1. Since a longer filter element 23 can process a stronger liquid flow, a filter with a determined desired capacity can thus be assembled in very simple manner.

## Claims

1. Return filter (1) mountable in a reservoir wall (4) and comprising a substantially cylindrical housing (2) mountable with an open end over an opening in the reservoir wall and provided with a connection (3) for a return conduit, which housing carries at its end lying opposite the open end a screw cover (5), a substantially cylindrical filter element holder (6), receiving a cylinder wall-shaped filter element (23) the bottom head end surface of which is supported against the holder (6), said filter element holder (6) being provided on a top edge with an outward protruding flange (8) which lies against a shoulder (9) in the housing close to the open end thereof, such that the filter element holder (6) can protrude through the opening in the reservoir wall (4) and wherein the screw cover (5) carries a pressing element (10) protruding into the interior of the housing to the open end thereof, pressing the filter element holder (6) with its flange (8) sealed against the shoulder (9) and pressing the filter element (23) against the holder (6), **characterized in that** the pressing element (10) comprises a disc-shaped part (11) with a central opening (27) for passage of liquid supplied via the return conduit to the inside of the filter element (23), an edge (20) close to its periphery which engages in sealed manner onto the filter element holder (6) and an edge (21) lying between this edge (20) and the opening (27) which lies in sealed manner against the top head end surface of the filter element (23) and in that the filter element (23) has a closed bottom and is resiliently supported by the holder (6) via a spring (24).

2. Return filter as claimed in claim 1, wherein the pressing element (10) is provided with a number of resilient fingers (25) clamping round the filter element (23).

3. Return filter as claimed in any of the foregoing claims, wherein the pressing element (10) has a rotatable connection to the cover (5).

4. Return filter as claimed in any of the foregoing claims, wherein the pressing element (10) comprises holding members (39) close to the cover (5) for fixedly holding an annular magnet (40).

5. Return filter as claimed in any of the foregoing claims, wherein the housing (2) has a double wall over a part of the periphery, the outer wall part is provided with openings (35) and arranged directly therebehind is a venting filter element and wherein between the venting filter element (33) and the inner wall a space (32) is defined which is in communication with a peripheral channel (31) under the shoulder, which channel, at least on the side lying diametrically opposite the double wall, can communicate with the interior of the reservoir via an annular gap (30) formed between the filter element holder (6) and the opening in the reservoir wall (4).

6. Return filter as claimed in claim 5, wherein the outer wall part (34) of the double wall is detachable.

7. Return filter as claimed in any of the foregoing claims, wherein all components, with at least the exception of the filter housing (6), the filter element (23) and the spring (24), are manufactured of plastic.

## Patentansprüche

1. Rückflußfilter (1), das an einer Behälterwand (4) montierbar ist und ein im wesentlichen zylindrisches Gehäuse (2) aufweist, das mit einem offenen Ende über einer Öffnung in der Behälterwand montierbar und mit einem Anschluß (3) für eine Rückflußleitung versehen ist, wobei das Gehäuse an seinem dem offenen Ende gegenüberliegenden Ende einen Schraubverschluß (5) aufweist, einem im wesentlichen zylindrischen Filterelementhalter (6), der ein zylinderwandförmiges Filterelement (23) aufnimmt, dessen untere Kopfstirnfläche gegen den Halter (6) abgestützt ist, wobei der Filterelementhalter (6) an einer oberen Kante mit einem nach außen vorstehenden Flansch (8) versehen ist, der gegen eine Schulter (9) in dem Gehäuse nahe dessen oberem Ende anliegt, so daR der Filterelementhalter (6) durch die Öffnung in der Gehäusewand (4) vorstehen kann, und wobei der Schraubdeckel (5) ein Andrückelement (10) trägt, das in das Innere des Gehäuses zu dessen offenem Ende vorsteht und den Filterelementhalter (6) mit seinem Flansch (8) abdichtend gegen die Schulter (9) andrückt und das Filterelement (23) gegen den Halter (6) andrückt, dadurch **gekennzeichnet,** daß das Andrückelement (10) ein scheibenförmiges Teil (11) aufweist mit einer Mittelöffnung (27) für den Durchfluß von Flüssigkeit, die über die Rückflußleitung zum Inneren des Filterelementes (43) zugeführt wird, einer nahe dem Umfang liegenden Kante (20), die abdichtend an dem Filterelementhalter (6) anliegt, und einer zwischen dieser Kante (20) und der Öffnung (27) liegenden Kante (21), die abdichtend gegen die obere Kopfstirnfläche des Filterelements (23) anliegt, und daß das Filterelement (23) einen geschlossenen Boden hat, und durch den Halter (6) über eine Feder (24) federnd abgestützt ist.

2. Rückflußfilter nach Anspruch 1,
bei dem das Andrückelement (10) mit einer Anzahl von federnden Fingern (25) versehen ist, die das Filterelement (23) ringsum festklemmen.

3. Rückflußfilter nach einem der vorangehenden Ansprüche, bei dem das Andrückelement (10) eine drehbare Verbindung mit dem Deckel (5) hat.

4. Rückflußfilter nach einem der vorangehenden Ansprüche, bei dem das Andrückelement (10) Halteelemente (39) nahe dem Deckel (5) aufweist zum Festhalten eines ringförmigen Magneten (40).

5. Rückflußfilter nach einem der vorangehenden Ansprüche, bei dem das Gehäuse (2) über einen Teil seines Umfangs eine Doppelwand aufweist, deren äußerer Wandteil mit Öffnungen (35) versehen ist und dahinter unmittelbar ein Entlüftungsfilterelement angeordnet ist, wobei zwischen dem Entlüftungsfilterelement (23) und der inneren Wand ein Zwischenraum (32) begrenzt ist, der in Verbindung mit einem Umfangskanal (31) unter der Schulter steht, wobei dieser Kanal mindestens an der der Doppelwand diametral gegenüberliegenden Seite mit dem Innern des Behälters über einen Ringspalt (30) kommunizieren kann, der zwischen dem Filterelementhalter (6) und der Öffnung in der Behälterwand (4) gebildet ist.

6. Rückflußfilter nach Anspruch 5,
bei dem der äußere Wandteil (34) der Doppelwand abnehmbar ist.

7. Rückflußfilter nach einem der vorangehenden Ansprüche, bei dem alle Komponenten, mit Ausnahme von wenigstens dem Filtergehäuse (6), dem Filterelement (23) und der Feder (24) aus Kunststoff bestehen.

## Revendications

1. Filtre de retour (1) pouvant être monté dans une paroi (4) de réservoir et comprenant un boîtier (2) pratiquement cylindrique pouvant être monté avec une extrémité ouverte au-dessus d'une ouverture ménagée dans la paroi du réservoir et munie d'une connection (3) pour un tube de retour, ledit boîtier porte au niveau de son extrémité s'étendant à l'opposé de l'extrémité ouverte un couvercle vissé (5), un organe de maintien (6) d'élément de filtre pratiquement cylindrique logeant un élément (23) de filtre de forme de paroi cylindrique dont la surface d'extrémité de tête inférieure est supportée contre l'organe de maintien (6), ledit organe de maintien (6) d'élément de filtre étant prévu sur un bord supérieur avec un flasque (8) faisant saillie vers l'extérieur et qui s'étend contre un épaulement (9) dans le boîtier proche de l'extrémité ouverte de celui-ci, de telle sorte que l'organe de maintien (6) de l'élément de filtre peut faire saillie au travers de l'ouverture dans la paroi (4) de réservoir, le couvercle vissé (5) portant un élément de pression (10) faisant saillie à l'intérieur du boîtier vers l'extrémité ouverte de celui-ci, comprimant l'organe de maintien (6) de l'élément de filtre avec son flasque (8) placé à étanchéité contre l'épaulement (9), et comprimant l'élément de filtre (23) contre l'organe de maintien (6), caractérisé en ce que l'élément de pression (10) comprend une partie (11) en forme de disque possédant une ouverture centrale (27) pour le passage d'un liquide alimenté par l'intermédiaire du tube de retour vers l'intérieur de l'élément de filtre (23), un bord (20) proche de sa périphérie est en prise d'une manière étanche sur l'organe de maintien (6) de l'élément de filtre et un bord (21) s'étendant entre ce bord (20) et l'ouverture (27) est placé à étanchéité contre la surface d'extrémité de tête supérieure de l'élément de filtre (23) et en ce que l'élément de filtre (23) possède un fond fermé et est supporté de manière élastique par l'organe de maintien (6) par l'intermédiaire d'un ressort (24).

2. Filtre de retour selon la revendication 1, dans lequel l'élément de pression (10) possède un certain nombre de doigts élastiques (25) de serrage autour de l'élément de filtre (23).

3. Filtre de retour selon l'une quelconque des revendications précédentes, dans lequel l'élément de pression (10) possède une liaison rotative avec le couvercle (5).

4. Filtre de retour selon l'une quelconque des revendications précédentes, dans lequel l'élément de pression (10) comprend des organes de maintien (39) voisins du couvercle (5) pour maintenir de manière fixe un aimant annulaire (40).

5. Filtre de retour selon l'une quelconque des revendications précédentes, dans lequel le boîtier (2) possède une paroi double sur une partie de la périphérie, le tronçon de paroi double possède des ouvertures (35) et un élément de filtre d'aération est agencé directement en arrière et dans lequel un espace (32) est défini entre l'élément de filtre d'aération (33) et la paroi interne, cet espace étant en communication avec un passage périphérique (31) placé sous l'épaulement, ledit passage, au moins sur un côté s'étendant diamétralement opposé à la paroi double, peut communiquer avec l'intérieur du réservoir par l'intermédiaire d'un intervalle annulaire (30) formé entre l'organe de maintien (6) de l'élément de filtre et l'ouverture ménagée dans la paroi (4) de réservoir.

6. Filtre de retour selon la revendication 5, dans lequel le tronçon de paroi externe (34) de la double paroi peut être détaché.

7. Filtre de retour selon l'une quelconque des revendications précédentes, dans lequel, à l'exception du boîtier de filtre (6), de l'élément de filtre (23) et du ressort (24) au moins, toutes les parties constitutives sont fabriquées en matière plastique.
